Europäisches Patentamt

(19) European Patent Office   (11) Numéro de publication: **0 222 779**

Office européen des brevets   **B1**

(12) **FASCICULE DE BREVET EUROPEEN**

(45) Date de publication du fascicule du brevet: 25.07.90   (51) Int. Cl.⁵: **B 01 D 25/00, B 01 D 25/12, B 01 D 25/32**

(21) Numéro de dépôt: 86901761.6

(22) Date de dépôt: 05.03.86

(86) Numéro de dépôt international:
**PCT/BE86/00007**

(87) Numéro de publication internationale:
**WO 86/07282 18.12.86 Gazette 86/27**

(54) **PERFECTIONNEMENTS ET ALTERNATIVES AUX FILTRES-PRESSES.**

(30) Priorité: 04.06.85 FR 8508529
19.07.85 FR 8511212
24.07.85 FR 8511424
21.10.85 FR 8515698

(43) Date de publication de la demande:
27.05.87 Bulletin 87/22

(45) Mention de la délivrance du brevet:
25.07.90 Bulletin 90/30

(84) Etats contractants désignés:
**BE CH DE FR GB LI NL SE**

(56) Documents cités:
| | |
|---|---|
| EP-A-0 051 174 | FR-A-1 464 767 |
| EP-A-0 051 683 | FR-A-1 478 297 |
| EP-A-0 081 715 | FR-A-2 215 258 |
| EP-A-0 117 159 | FR-A-2 255 092 |
| CH-A-451 091 | FR-A-2 382 257 |
| DE-A-1 436 279 | FR-A-2 384 526 |
| DE-A-1 536 844 | FR-A-2 441 405 |
| DE-A-1 611 139 | FR-A-2 444 488 |
| DE-A-3 313 955 | GB-A-1 118 383 |
| FR-A-1 234 366 | US-A-3 153 630 |
| FR-A-1 283 313 | US-A-3 270 887 |
| FR-A-1 314 040 | |

(73) Titulaire: **Parmentier, Alfred Henri**
**69, Boulevard Machtens B6**
**B-1080 Bruxelles (BE)**

(72) Inventeur: **Parmentier, Alfred Henri**
**69, Boulevard Machtens B6**
**B-1080 Bruxelles (BE)**

Courier Press, Leamington Spa, England.

**Description**

Ce qui suit concerne la séparation solide/liquide par les filtres-presses, en particulier ceux à membranes de compression des gâteaux filtrés.

Il est connu, que dans une ossature de résistance, les filtres-presses utilisent une pluralité de plateaux recouverts de tissu filtrant et récoltant les filtrats.

Les plateaux coopèrent avec des cadres séparés, dans lesquels est injectée sous pression, la bouillie solide/liquide à filtrer et où se forment les gâteaux.

Ou bien, dans un plateau plus épais sont creusées deux chambres (correspondant à deux demi-cadres). Quand deux plateaux sont accolés, deux chambres contigues recoivent ensemble un gâteau. Un plateau de ce genre est appelé plateau chambré.

L'alimentation de la bouille dans un cadre est aisée. Par contre, pour les plateaux chambrés, il est malaisé d'introduire la bouille, dans une chambre formée par deux plateaux accolés. Des moyens de le faire sont connus. Ce qui suit s'applique aux plateaux et cadres séparés ou aux plateaux chambrés.

Pour évacuer les gâteaux, il faut ouvrir le filtre-presse et écarter les plateaux des cadres ou les plateaux chambrés entre'eux.

Dans l'état de la technique, il est connu que si la bouillie est alimentée par le centre du filtre-presse ou en général, par la partie du plateau située entre ses surfaces de contact périphériques, pour l'étanchéité du filtre, il se pose un problème de fixation des tissus autour des orifices percés dans la dite partie des plateaux. Cette fixation se fait par des pièces spéciales, qui font perdre beaucoup de temps à chaque remplacement des tissus et peuvent être rendues inétanches (exemple: brevet GT 1.118.383).

Les plateaux peuvent utiliser une ou deux membranes de compression des gâteaux. Si l'alimentation de la bouille est centrale, toute membrane doit être trouée et fixée par les pièces spéciales, dont question ci-avant pour les tissus. Mais cette fixation devient précaire lors du gonflage de la ou des membranes. Il y a grand risque d'échapper à la fixation, aussi doit-on limiter la pression du fluide gonflant les membranes.

Dans l'état de la technique, les plateaux, qu'ils soient métalliques (fonte, acier, inox ...) ou en matière thermo-durcissable (polypropylène ...) ont des faces ou parois complètes, pleines. Elles sont cannelées dans la masse, entre les surfaces de contact (ex: US 3,270,887 item 36).

Si un membrane par plateau est utilisée, une seule des faces est cannelée, l'autre est creusée pour faire chambre recevant le fluide de gonflage de la membrane.

Si celle-ci est lisse (ex FR 1.283.313 Fig. 1) l'on ne peut filtrer de ce côté. Un gâteau est filtré sur un tissu seulement et comprimé par une membrane seulement.

Si la membrane est cannelé, il se pose un problème d'évacuation des filtrats de son côté. Il faut trouer aussi, à cet effet les tissus et les membranes aux points d'évacuation. Par d'autres pièces spéciales, il faut les fixer de façon étanche.

Si la chambre de gonflage concerne deux membranes lisses, formant un sac (ex: US 3,270,887 Fig. 20—23), celui ci doit contenir une pièce pleine de soutien (item 101) pour enclaver le sac et le maintenir, entre deux gâteaux.

Si la dite chambre concerne deux membranes cannelées formant un sac (ex: FR 2255092) celui-ci doit être enclavé et maintenu (Fig. 2) comme ci-avant. Un problème se pose pour l'évacuation des filtrats.

Dans certains filtres, l'on remplace les cannelures dans la masse d'un plateau plein ou celles de membranes par une treillis métallique (ex GB 1.118.383 Fig. 1 item 5) qui crée des difficultés d'évacuation des filtrats, d'étanchéité et de fixation.

D'autres filtres ne comportent qu'une chambre de compression et membrane et une chambre à filtrats (ex: FR 1.283.313 Fig. 1). Leurs parois ne sauraient qu'être pleines et métalliques. A l'écartement des deux pièces, le tissu et la membrane vont tomber, sauf à les maintenir pas d'autres pièces spéciales. Des plateaux pleins cannelés (ex EP 0 051683; FR 2384526) sont fendus en leur milieu pour faire chambre de compression de deux membranes. Servent de membranes les parties extérieu res, donc elles sont de la même matière que l'entièreté du plateau, qui ne peut être qu'en plastique, jamais métallique. L'on constate aussi en l'état de la technique que les membranes, qu'elles soient lisses ou cannelées et leur chambre pour recevoir le fluide de gonflage, forment un pièce séparée d'autres collectant les filtrats et recevant le gâteau. L'on constate d'autre part, que les plateaux et autres élements constituant une unité de filtration, étant des pièces pleines sont lourds et partant les organes les supportant ou les écartant doivent être particulièrement résistants. Les parois des plateaux, les plaques de soutien de ou des membranes sont complètes, pleines, dans tous les cas de l'état de la technique.

Si l'un des deux cadres coopérant avec un plateau ou une des deux chambres de plateaux chambrés accolés est mal ou pas alimenté, chaque face du plateau et de la plaque de soutien des membranes utilisées est soumise à une pression différente. Le plateau ou la plaque se déforme ou casse, entraînant l'accident à des plateaux voisins, désormais inutilisables- cas fréquent, qui immobilise le filtre-presse en attendant un remplacement coûteux.

Considérant l'état de la technique, nous avons poursuivi les objectifs ci-après:

a) étudier des plateaux incassables et indéformables, en limitant l'usage de matière rigide (métal, polypropylene etc) à de seuls encadrements correspondant aux surfaces de contact, l'âme du plateau étant constituée par deux membranes élastiques. Le plateau en entier est un seul composite servant à la fois de chambre de gonflage de deux membranes, dee récolteur de filtrats et de récepteur du gâteau.

b) étudier l'utilisation de deux membranes, par plateau l'une du moins des membranes étant cannelée, comprimant un seul gâteau, filtré par deux tissus, celà sans trouer les tissus et membranes entre les surfaces de contact, éviter toute pièce spéciale de fixation, tant pour l'alimentation du la bouillie à filtrer que pour l'évacuation des filtrats, éviter, sans dispositif spécial, que les membranes puissent tomber à l'ouverture du filtre

c) constituer des plateaux simples et légers, supportés et écartés par des moyens alléges par rapport à ceux nécessai res pour les filtres-presses de l'état de la technique.

L'invention concerne donc les filtre-presses connus en soi, selon la préambule de la revendication 1, et qui présentent des plateaux correspondant à la partie caractérisante de ladite revendication 1.

La description ci-après se réfère aux

Figure 1: Coupe verticale dans un plateau composite.

Figure 2: Coupe verticale dans un plateau composite dont les membranes sont incurvées par une pièce de forme à deux bossages.

Figure 3: comme la Figure précédente, mais la pièce de forme est à un bossage et un côté plan.

Figure 4: Représentation schématique de petits vérins pour l'écartement des plateaux et cadres ou des plateaux chambrés, parce que ceux-ci sont légers.

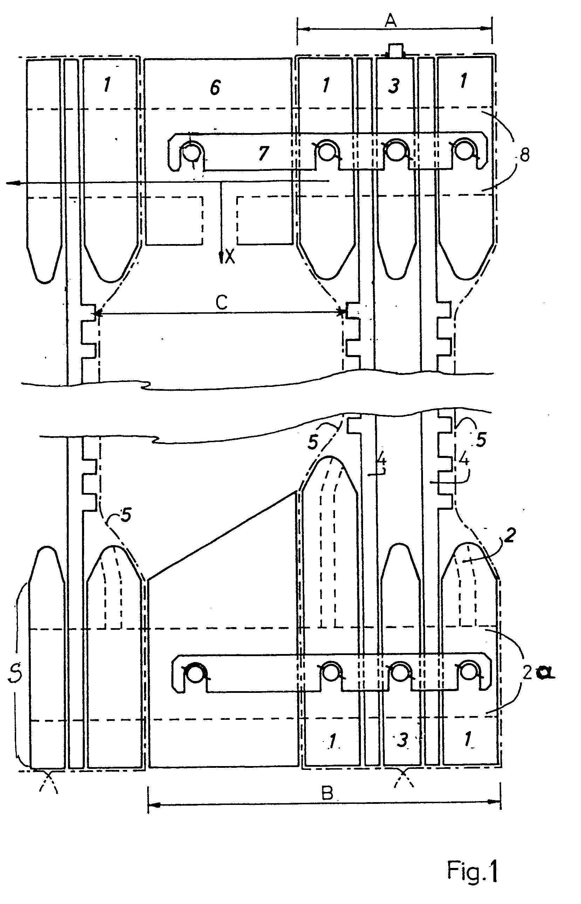

La Fig. 1 représente un plateau composite incassable, indéformable, léger. Composite parce qu'il sert aux trois usages ci-avant (membranes, filtrats, gâteau) et qu'il est formé par différentes pièces constitutives, assemblées en pièce unique. Le plateau composite (A) comprend trois encadrements minces en matière rigide limités aux surfaces de contact (S).

Les deux encadrements extérieurs (1) et (1) portent de petits conduits (2) pour l'écoulement des filtrats vers un collecteur d'évacuation (2a).

L'encadrement (3) central, réduit aussi aux surfaces de contact, sert de chambre pour le fluide de compression des membranes cannelées (4), une de chaque côté. Ces encadrements et membranes sont assemblés par des boulons traversants internes ou par des attaches extérieures. Les tissus filtrants (5) entourent le plateau composite ainsi constitué et sont maintenus par des attaches rapides connues. Ils s'incurvent contre les membranes et chacun reçoit une partie du gâteau filtré.

Si le gâteau (C) peut être épais, l'on fait coopérer une plateau composite avec deux cadres (6). Ils sont soit séparés du plateau, soit reliés par des attaches (7) à montage et démontage rapides, en vue du remplacement des tissus filtrants. L'unité de filtration est alors (B).

L'alimentation de la bouillie se fait par le canal général (8) situé dans un ou des angles des plateaux et cadres et par un conduit suivant la flèche X, par cadre.

Si l'on n'utilise pas de cadres, en augmentant selon l'épaisseur du gâteau à obtenir, l'épaisseur des encadrements (1) (1) extérieurs, l'on forme des plateaux chambrés.

Mais l'alimentation de la bouille entre deux plateaux chambrés accolés ne peut se faire que par des moyens plus compli qués, mais néanmoins connus.

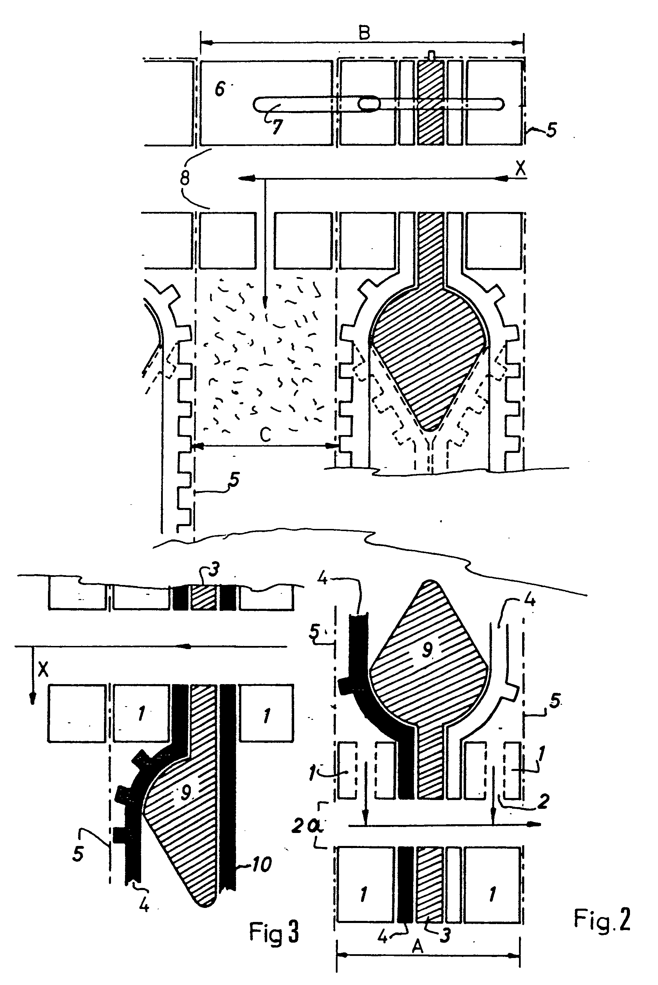

Ainsi que le montre la Figure 2, quand une grande quantité de filtrats doit être éliminé, il y a intérêt à incurver les membranes (4) cannelées, pour ménager un creux plus important au dessus des petits conduits (2). A cet effet, l'encadrement central (3) est prolongé par une pièce de forme (9) à deux bossages.

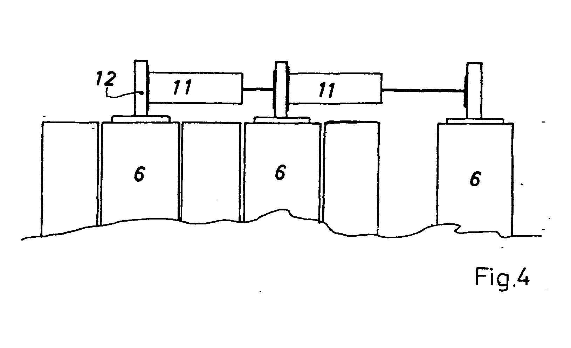

Ainsi que le représente la Figure 3, si la filtration ne donne qu'un gâteau mince, malgré une grande quantité de filtrats, l'un des bossages de la pièce de forme (9) est supprimé. L'autre côté est plan et correspond à une membrane lisse (10) particulièrement élastique et à grande capacité d'expansion. Les plateaux composites ainsi constitués sont très légers. Les moyens de les écarter pour l'enlèvement des gâteaux sont des moyens simples, comme de petits vérins pneumatiques Figure 4 (11) s'appuyant en ligne droite ou en quinconce sur des plats verticaux (12), fixés aux plateaux ou aux cadres. Comme représenté, ces plats sont fixés aux cadres (6), les petits vérins y sont fixés par le fond pour la poussée qui s'applique sur le plat (12), en ligne du cadre voisin, ou sur le dit plat du cadre suivant ce voisin, pour l'action en quinconce.

Celà est évidemment applicable de plateau chambré à plateau chambré.

**Revendications**

1. Filtres-presses, qu'ils soient à plateaux et cadres ou à plateaux chambrés, par réalisation de plateaux de filtration composites, incassables, indéformables, légers, munis de membranes de compression des gâteaux filtrés, par gonflage des dites membranes par un fluide sous pression injecté dans une chambre de compression au dos des membranes, les plateaux comportant des surfaces périphériques planes-(surfaces de contact) serrées fortement entr'elles, de plateau à plateau, pour rendre étanche le filtre-presse pour la filtration sous pression et la compression des gâteaux filtrés; les plateaux étant après la dite compression séparés pour la décharge des gâteaux comprimés;

caractérisés en ce que chaque plateau est constitué par l'assemblage permanent — dans l'ordre de:

un premier encadrement (1) en matière rigide fonte aluminium, polypropylène etc), collectant les filtrats dont les dimensions sont limitées aux surfaces de contact (S) du plateau, avec les plateaux voisins

une membrane élastique (4) cannelée ou pastillée d'un côté, sur lequel s'appuie le tissu filtrant

un encadrement en matière rigide (3) formant la chambre de compression recevant le fluide comprimé de gonflage des membranes et étant limité en correspondance avec les surface (S)

une seconde membrane (4) qui peut être identique à ladite membrane, ou bien peut être une membrane tissu

un troisième encadrement comme (1) ci-dessus, les plateaux utilisant en matière rigide uniquement ce qui constitue les dits encadrements, qui forment aussi les surfaces de contact (S) des plateaux, ceux-ci assemblés de façon permanente étant séparables l'un de l'autre pour le décharge des gâteaux filtrés, par de petits vérins (11) localisés soit en ligne, soit en quinconce entre deux plateaux.

2. Filtres-presses suivant la revendication 1, caractérisés en ce que l'encadrement central (3) est muni d'un prolongement intérieur (9) à deux bossages, incurvant les membranes (4).

3. Filtres-presses suivant la revendication 1, caractérisés en ce que l'encadrement (3) est muni d'un prolongement (9) ayant d'un côté un bossage, l'autre côté étant plan pour recevoir une membrane lisse très élastique (10).

**Patentansprüche**

1. Filterpressen mit Platten und Rahmen oder mit Kammern bildenden Platten aus bruchsicheren, formstabilen, leichten Verbundfilterplatten, die mit Membranen zur Kompression der Filterkuchen durch Aufblähung der Membranen mittels in eine Kompressionskammer auf der Rückseite der Membranen eingespritzter Druckflüssigkeit versehen sind, wobei die Platten ebene, von Platte zu Platte dicht gegeneinandergepreßte Umfangsflächen (Kontaktflächen) aufweisen, um die Filterpresse für die Filtration unter Druck und die Kompression der Filterkuchen abzudichten, wobei die Platten nach der Kompression für das Abführen der komprimierten Kuchen getrennt werden, dadurch gekennzeichnet, daß jede Platte durch die Permanentverbindung in Aufeinanderfolge aus:

einer ersten Umrahmung (1) aus steifem Material (Aluminium, Polypropylen etc.), die die Filtrate sammelt und deren Abmessungen auf die Kontaktflächen (S) der Platte mit den Nachbarplatten begrenzt sind,

einer elastischen Membran (4), die auf einer Seite, gegen die das Filtergewebe anliegt, gerippt oder genoppt ist,

einer Umrahmung (3) aus steifem Material, die die Kompressionskammer bildet, welche die komprimierte Flüssigkeit zum Aufblähen der Membranen aufnimmt und in Übereinstimmung mit den Flächen (S) begrenzt ist,

einer zweiten Membran (4),

einer dritten Umrahmung wie (1) oben,

gebildet wird, wobei die Platten nur das als steifes Material verwenden, was die Umrahmungen bildet, die auch die Kontaktflächen (S) der Platten bilden, welche, in Permanentverbindung, für das Abführen der Filterkuchen durch kleine Stellglieder (11) voneinander trennbar sind, die entweder in Reihe oder versetzt zwischen zwei Platten angeordnet sind.

2. Filterpressen nach Anspruch 1, dadurch gekennzeichnet, daß die mittlere Umrahmung (3) mit einer inneren Verlängerung (9) mit zwei die Membranen (4) krümmenden Buckeln versehen ist.

3. Filterpressen nach Anspruch 1, dadurch gekennzeichnet, daß die Umrahmung (3) mit einer Verlängerung (9) versehen ist, die auf einer Seite einen Buckel aufweist, wobei die andere Seite eben ist, um eine Membran aufzunehmen, die mit der besagten Membran identisch oder aber auch eine glatte Membran (10) sein kann.

**Claims**

1. Filter-presses comprising plates and frames or comprising recessed plates by the realization of composite, unbreakable, undistordable, light filtration plates with membranes to compress the filtered cakes by inflating the said membranes by a pressurized fluid injected at the back of the membranes, the plates having peripherical flat surfaces (sealing surfaces) strongly and tightly pressed from plate to plate for the filtration under pressure and the compression of the cakes, the said plates being after the said compression separated for the unloading of the cakes

characterized by the fact that each plate is formed by the permanent assembly of successively the following parts:

made of a rigid material (aluminum, polypropylen etc.) one first framing (1) collecting the filtrates, its sizes being limited to form only the sealing surfaces (S) of the plate

an elastic membrane (4) which is pipped on one side covered by a filter cloth

a second framing (3) of rigid material forming the chamber receiving the fluid inflating the membranes, this framing being sized as the framing (1).

a second membrane (4)

a third framing as (1) hereabove.

the plates using only as rigid material what constitutes the said framings sized to form only the sealing surfaces of the plate, said framings and membranes being permanently assembled to form the plate and the plates being separable one from another to unload the cakes, by small jacks (11) located either in line or in quinconx at the top and between two plates.

2. Filter-presses following claim 1, characterized by the fact that the central framing (3) has an internal extension (9) with two bosses incurving the membranes (4).

3. Filter-presses following claim 1, characterized by the fact that the framing (3) has an internal extension (9) with one boss on one side, the other side being flat to receive a smooth membrane (10).

EP 0 222 779 B1

Fig.1

B

6

7

8

X

5

C

5

X

3

4

5

4

9

1

1

5

1

1

2

2α

9

1

5

10

4

1

4

Fig 3

Fig.2

1

1

4

3

A

Fig.4